# FASCICULE DE BREVET EUROPEEN

(11) **EP 1 694 009 B1**
(45) Date de publication et mention de la délivrance du brevet: **24.10.2007**
(21) Numéro de dépôt: 06100943.7
(22) Date de dépôt: 27.01.2006
(51) Int. Cl.: H04L 12/56

(54) **Dispositif de conversion de données IP sous ATM en données IP sous Ethernet à haute disponibilité**
Vorrichtung mit hoher Verfügbarkeit zur Übersetzung von IP über ATM Daten in IP über Ethernet Daten
Device having a high availability for translation of IP over ATM data in IP over Ethernet data

(30) Priorité: 16.02.2005 FR 0550440
(43) Date de publication de la demande: 23.08.2006
(73) Titulaire: Alcatel Lucent, 75008 Paris (FR)
(72) Inventeur: Coutant, Régis, 44120 Vertou (FR); Le Marec, Pierre, 44800 Saint-Herblain (FR); Desorbay, Eric, 44750 Campbon (FR)
(74) Mandataire: El Manouni, Josiane

(56) Documents cités:
- EP-A- 1 011 231
- US-A1- 2003 048 746

## Description

L'invention concerne les réseaux de communication, et plus précisément le transfert de données selon le protocole Internet (ou données IP), entre des liens Ethernet et des liens ATM (pour « Asynchronous Transfer Mode » - mode de transfert asynchrone).

Comme le sait l'homme de l'art, certains réseaux de communication, comme par exemple les réseaux mobiles à transport de paquets de type GPRS, offrent une connectivité vers l'Internet. Pour ce faire leur réseau de coeur (ou « Core Network ») comporte notamment un ou plusieurs noeuds de type SGSN (« Service GPRS Serving Node »).

Un noeud SGSN assure notamment l'interface et le transfert de paquets de données IP ascendants et descendants entre le réseau fédérateur (ou « backbone »), du réseau de coeur dont il fait partie et qui est raccordé au réseau d'accès radio de son réseau mobile, et un noeud de type GGSN (« Gateway GPRS Serving Node ») ou un routeur dudit réseau de coeur, qui assure la connectivité avec un réseau externe Internet.

Un noeud SGSN étant nativement de type IP, il transfère des paquets IP vers le réseau fédérateur ou vers le réseau Internet au moyen du protocole de transfert Ethernet (dit de niveau 2). On parle alors de données IP sous Ethernet.

Le transfert des paquets IP vers le réseau Internet s'effectuant au moyen du protocole Ethernet, il n'y a donc pas de problème de transfert entre un noeud SGSN et le réseau Internet.

En revanche, le transfert des paquets IP vers le réseau d'accès radio se faisant au moyen du protocole de transfert ATM (on parle alors de données IP sous ATM), une conversion ATM/Ethernet doit donc être effectuée à l'interface entre un noeud SGSN et un réseau fédérateur.

Cette conversion est généralement assurée par une passerelle (ou « gateway ») ATM/Ethernet spécifique.

En raison de son importance stratégique, cette passerelle doit présenter un haut niveau de disponibilité. Pour ce faire, la passerelle ATM/Ethernet doit offrir une grande souplesse vis-à-vis des pannes (ou dysfonctionnements) pouvant survenir sur ses liens externes ATM et Ethernet et en interne, et vis-à-vis des problèmes d'alimentation. Un example de ce type de passerelle est donné dans le document US2003/0048746.

Les passerelles ATM/Ethernet connues sont capables de mettre en oeuvre, du côté Ethernet, un protocole de redondance de routeurs virtuels ou VRRP (pour « Virtual Router Redundancy Protocol ») permettant de supprimer un unique point de panne dans un environnement routé statique par défaut. Plus précisément, le protocole VRRP définit un protocole spécifique qui attribue dynamiquement à un routeur virtuel, alors appelé routeur VRRP maître (ou actif), la responsabilité de contrôler les adresses IP associées à d'autres routeurs virtuels et de transmettre à ces derniers les paquets qui leurs sont destinés. Lorsque le routeur VRRP maître devient indisponible ou injoignable, la passerelle ATM/Ethernet analyse l'état de disponibilité d'un routeur virtuel de substitution, en état de veille (ou inactif), ainsi que l'état du lien Ethernet entre le noeud SGSN et le routeur de substitution, afin de déterminer s'il peut être substitué au routeur VRRP maître. Si tel est le cas, le routeur de substitution devient alors le nouveau routeur maître (ou actif) tandis que l'ancien routeur maître devient le nouveau routeur de substitution (en état de veille).

Du côté ATM, il n'existe pas de mécanisme de substitution, équivalent au protocole VRRP et permettant d'assurer une haute disponibilité aux passerelles ATM/Ethernet.

La technologie ATM comporte certes un mécanisme de protection de lien appelé APS (pour « Automatic Protection Switching » - commutation de protection automatique) qui consiste à prévoir un lien ATM de substitution pour chaque lien ATM et à basculer le trafic d'un lien ATM objet d'une panne vers le lien ATM de substitution qui lui correspond. Ce mécanisme APS ne permet donc de protéger que les liens qui se terminent au niveau d'un même commutateur ATM.

La technologie ATM comporte également un mécanisme de connexion de canal virtuel ou SVC (pour « Switched Virtual Connection »), mais celui-ci ne permet pas de rétablir seul une connexion virtuelle vers un autre équipement terminal secondaire en cas de panne d'un équipement terminal primaire.

Il est également possible de mettre en oeuvre, au dessus des couches du protocole ATM, un protocole de routage de type OSPF (« Open Shortest Path First Protocol »). Mais, ce protocole est assez lourd à mettre en oeuvre. En outre, il ne peut pas fonctionner en mode actif/inactif (ou « active/standby »).

En raison des limitations précitées, une passerelle ATM/Ethernet à haute disponibilité doit être réalisée sous la forme d'un composant dédié, ce qui en augmente notablement le coût.

L'invention a donc pour but d'améliorer la situation.

Elle propose à cet effet un dispositif de conversion de données IP sous ATM en données IP sous Ethernet, et réciproquement, pour un réseau de communication ATM/Ethernet comprenant un premier équipement capable d'échanger des données IP selon le protocole Ethernet et un réseau fédérateur capable d'échanger des données IP selon le protocole ATM.

Ce dispositif de conversion se caractérise par le fait qu'il comprend :
- deux passerelles raccordées chacune par un lien Ethernet au premier équipement et par des liens ATM, qui se correspondent un à un, à un équipement d'accès au réseau fédérateur, muni d'un module de protection de lien ATM, et chargées chacune d'assurer une conversion protocolaire ATM/Ethernet de données IP à transférer,
- des moyens de protection de lien Ethernet (par exemple de type MPLE) implantés dans chacune des passerelles et chargés de placer leur passerelle dans un état actif autorisant le transfert de données IP ou dans un état inactif interdisant le transfert de données IP, en coopération avec des moyens de protection de lien Ethernet implantés dans le premier équipement,
- des moyens de gestion implantés dans chacune des passerelles et chargés chacun, en cas de problème de transfert de données IP entre le premier équipement et l'équipement d'accès, via sa passerelle (lorsqu'elle est initialement active), de provoquer l'arrêt de l'utilisation de tous les liens ATM qui sont raccordés à sa passerelle afin que l'équipement d'accès utilise les liens ATM correspondants qui sont raccordés à l'autre passerelle initialement inactive, et, lorsque les moyens de protection de lien Ethernet n'ont pas encore placé sa passerelle initialement active dans son état inactif et la passerelle inactive dans son état actif, pour leur ordonner ce placement.

On entend ici par « passerelle initialement active » une passerelle qui passe de l'état actif (maître) à l'état inactif (en veille) à la demande des moyens de protection de lien Ethernet du dispositif et du premier équipement, et par « passerelle initialement inactive » une passerelle qui passe de l'état inactif à l'état actif à la demande des moyens de protection de lien Ethernet du dispositif et du premier équipement.

Le dispositif de conversion selon l'invention peut comporter d'autres caractéristiques qui peuvent être prises séparément ou en combinaison, et notamment :
- chacun des moyens de gestion peut être chargé d'observer le fonctionnement de l'équipement d'accès afin de détecter un problème de transfert au niveau d'un lien ATM de sa passerelle active lorsque survient un basculement de trafic vers le lien correspondant de la passerelle inactive, décidé par le module de protection de lien ATM de l'équipement ;
- en variante, chacun des moyens de gestion peut être chargé d'observer le fonctionnement de sa passerelle afin de détecter un problème de transfert au niveau d'un lien ATM de sa passerelle active lorsque survient l'arrêt de l'utilisation de ce lien ATM, décidé par le module de protection de lien ATM de l'équipement d'accès ;
- chacun des moyens de gestion peut être chargé de provoquer l'arrêt de l'utilisation des liens ATM de sa passerelle lorsque le nombre de liens ATM objets d'un problème est supérieur ou égal à un seuil choisi ;
- chacun des moyens de gestion peut être chargé d'observer le fonctionnement des moyens de protection de lien Ethernet correspondant afin de détecter un problème de transfert au niveau d'un lien Ethernet lorsqu'ils décident de changer l'état d'activité de chacune des passerelles ;
- dans une première variante, chacun des moyens de gestion peut être chargé d'observer le fonctionnement de sa passerelle afin de détecter un problème de transfert au niveau d'un lien Ethernet lorsque survient un changement d'état d'activité de chacune des passerelles, décidé par les moyens de protection de lien Ethernet ;
- dans une seconde variante, chacun des moyens de gestion peut être chargé d'observer le fonctionnement du premier équipement de manière à détecter un problème de transfert au niveau d'un lien Ethernet lorsque survient un basculement de trafic du lien Ethernet de la passerelle active vers le lien Ethernet de la passerelle inactive, décidé par des moyens de protection de lien Ethernet implantés dans le premier équipement ;
- chacun des moyens de gestion peut être chargé d'observer le fonctionnement de sa passerelle afin de détecter un problème de fonctionnement interne lorsque survient un arrêt de transfert de données IP sur les liens ATM ou sur le lien Ethernet de sa passerelle lorsqu'elle est active ;
- un lien auxiliaire, de préférence Ethernet, peut raccorder les passerelles l'une à l'autre. Dans ce cas, les moyens de gestion peuvent être chargés d'observer le fonctionnement de leur passerelle et, en cas de détection de problèmes rendant simultanément inopérantes ces passerelles sur des liens de types différents, d'ordonner à leur passerelle de transférer les données IP reçues vers l'autre passerelle via le lien auxiliaire.

Un tel dispositif de conversion peut par exemple se présenter sous la forme d'une interface de conversion ATM/Ethernet.

L'invention est particulièrement bien adaptée, bien que de façon non exclusive, aux réseaux mobiles, par exemple de type UMTS. Elle concerne d'une manière générale toute communication mettant en oeuvre les protocoles ATM et Ethernet et nécessitant un haut niveau de disponibilité.

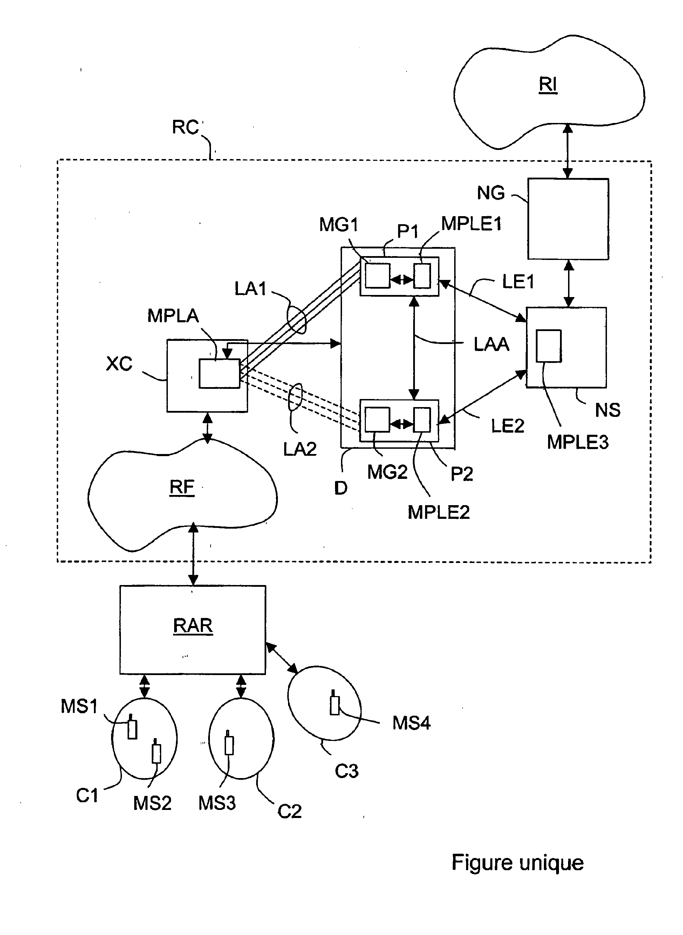

D'autres caractéristiques et avantages de l'invention apparaîtront à l'examen de la description détaillée ci-après, et du dessin annexé, sur lequel l'unique figure illustre de façon très schématique et fonctionnelle un réseau mobile équipé d'un exemple de réalisation d'un dispositif de conversion selon l'invention et raccordé à un réseau externe Internet. Le dessin annexé pourra non seulement servir à compléter l'invention, mais aussi contribuer à sa définition, le cas échéant.

L'invention a pour objet de permettre une haute disponibilité de l'équipement chargé, dans un réseau de communication ATM/Ethernet, de la conversion des données IP sous ATM en données IP sous Ethernet, et réciproquement, grâce à une grande souplesse notamment vis-à-vis des pannes (ou dysfonctionnements) qui peuvent survenir sur ses liens ATM et Ethernet et/ou en interne.

Dans ce qui suit, on considère à titre d'exemple non limitatif que le réseau de communication ATM/Ethernet mettant en oeuvre l'invention est un réseau mobile de type cellulaire, tel qu'un réseau de paquets de type UMTS. Mais, l'invention n'est pas limitée à ce type de réseau. Elle concerne tout type de réseau de communication ATM/Ethernet utilisant des équipements chargés de convertir des données IP sous ATM en données IP sous Ethernet et réciproquement.

On a représenté sur l'unique figure, de façon très schématique, un réseau UMTS couplé à un réseau de communication externe RI, comme par exemple le réseau Internet.

Bien entendu, le réseau UMTS peut être raccordé à plusieurs réseaux externes, publics et/ou privés.

Comme cela est illustré sur l'unique figure, le réseau UMTS peut, d'une façon très schématique mais néanmoins suffisante à la compréhension de l'invention, être résumé à un réseau d'accès radio RAA couplé par une interface à un réseau de coeur (ou « Core Network ») CN.

Le réseau d'accès radio RAA comporte un ensemble de stations de base (appelées Node Bs) et de contrôleurs de réseau radio (appelés RNCs), raccordés entre eux, ainsi qu'à un gestionnaire de réseau d'accès. Chaque station de base (Node B) est associée à au moins une cellule Ci couvrant une zone radio dans laquelle des terminaux (ou stations) mobiles MSj peuvent établir (ou poursuivre) des liaisons radio. Dans l'exemple illustré, l'indice i est compris entre 1 et 3, et l'indice j est compris entre 1 et 4, mais ils peuvent prendre n'importe quelle valeur non nulle.

Le réseau de coeur CN comprend un ensemble d'équipements de réseau, raccordé aux contrôleurs de réseau radio (RNCs) du réseau d'accès radio RAA ainsi qu'à un gestionnaire de réseau de coeur (non représenté) et un réseau fédérateur (ou « backbone ») RF. L'ensemble d'équipements de réseau comprend notamment des noeuds de type GGSN (« Gateway GPRS Serving Node ») et des noeuds de type SGSN (« Service GPRS Serving Node »), ainsi qu'éventuellement des équipements d'accès XC, qui sont généralement raccordés respectivement au « backbone » IP GPRS et au réseau fédérateur (ATM) RF.

Il est rappelé qu'un noeud SGSN est notamment responsable de l'interface et du transfert de paquets de données ascendants et descendants entre le réseau d'accès radio RAA et le réseau de coeur CN. Il est nativement de type IP. Par ailleurs, il est rappelé qu'un noeud GGSN assure le rôle d'interface logique entre son réseau UMTS et les réseaux externes RI. Il assure donc la connectivité de son réseau UMTS avec un ou plusieurs réseaux externes.

Le réseau de coeur CN est généralement couplé au réseau d'accès radio RAA par l'intermédiaire de son réseau fédérateur RF.

Dans l'exemple non limitatif illustré, le réseau de coeur CN ne comporte qu'un noeud SGSN référencé NS, couplé au réseau fédérateur RF par l'intermédiaire d'un dispositif de conversion D et d'un équipement d'accès au réseau fédérateur RF référencé XC.

On considère dans ce qui suit que l'équipement d'accès XC est un commutateur ATM optique (de type « cross-connect »). Ce commutateur optique XC comprend classiquement, comme illustré, un module de protection de lien ATM, ci-après appelé module MPLA, sur lequel on reviendra plus loin.

Afin de permettre la conversion ATM/Ethernet, l'invention propose un dispositif de conversion D du type de celui illustré sur l'unique figure. Un tel dispositif D étant placé entre un équipement Ethernet, ici un noeud SGSN NS, et un réseau fédérateur RF, il peut donc être agencé sous la forme d'une interface ATM/Ethernet.

Le dispositif de conversion D comprend deux passerelles P1 et P2 comportant chacune un module de protection de lien Ethernet MPLE1 ou MPLE2 couplé à un module de gestion MG1 ou MG2.

La première passerelle P1 est raccordée, d'une part, à l'équipement Ethernet, ici un noeud SGSN NS, par un premier lien Ethernet LE1, et d'autre part, au commutateur XC par des premiers liens ATM LA1. Cette première passerelle P1 comprend un module de conversion ATM/Ethernet classique, chargé de convertir les données IP sous ATM, provenant du commutateur XC via l'un des premiers liens ATM LA1, en données IP sous Ethernet, destinées au noeud SGSN NS via le premier lien Ethernet LE1, et réciproquement de convertir les données IP sous Ethernet, provenant du noeud SGSN NS via le premier lien Ethernet LE1, en données IP sous ATM, destinées au commutateur XC via l'un des premiers liens ATM LA1.

La seconde passerelle P2 est identique à la première passerelle P1. Elle est raccordée, d'une part, au noeud SGSN NS, par un second lien Ethernet LE2, et d'autre part, au commutateur XC par des seconds liens ATM LA2. Cette seconde passerelle P2 comprend également un module de conversion ATM/Ethernet classique, chargé de convertir les données IP sous ATM, provenant du commutateur XC via l'un des seconds liens ATM LA2, en données IP sous Ethernet, destinées au noeud SGSN NS via le second lien Ethernet LE2, et réciproquement de convertir les données IP sous Ethernet, provenant du noeud SGSN NS via le second lien Ethernet LE2, en données IP sous ATM, destinées au commutateur XC via l'un des premiers liens ATM LA2.

Chacune des première P1 et seconde P2 passerelles peut être placée dans un état actif, l'autorisant à transférer des données IP reçues, ou dans un état inactif (ou état de veille), lui interdisant de transférer des données IP reçues. Quand l'une des passerelles est dans son état actif, l'autre est dans son état inactif. Une passerelle active est dite passerelle maître, tandis qu'une passerelle inactive est dite passerelle en veille.

Il est important de noter qu'à chaque premier lien ATM LA1 correspond un second lien ATM LA2 destiné à se substituer à lui en cas de besoin. Bien entendu, chaque premier lien ATM LA1 peut également être substitué au second lien ATM LA2 correspondant en cas de besoin.

La substitution d'un premier lien ATM LA1 par le second lien ATM LA2 correspondant, et réciproquement, est contrôlée par le module MPLA du commutateur XC. Ce module MPLA est par exemple destiné à mettre en oeuvre le mécanisme de protection de lien ATM appelé APS (pour « Automatic Protection Switching » - commutation de protection automatique). Comme indiqué précédemment, ce mécanisme consiste à observer le trafic sur les premiers (ou seconds) liens ATM LA1 (ou LA2) établis entre le commutateur XC et la passerelle maître P1 (ou P2) de manière à détecter tout problème ou panne ou dysfonctionnement survenant sur l'un d'entre eux, et à basculer le trafic du premier (ou second) lien ATM LA1 (ou LA2) objet d'une panne vers le second (ou premier) lien ATM LA2 (ou LA1) de substitution qui lui correspond.

Les modules de protection de lien Ethernet, qui sont implantés dans le dispositif D, ci-après référencés modules MPLE1 et MPLE2, sont par exemple destinés à mettre en oeuvre le mécanisme de protection de lien Ethernet appelé VRRP (pour « Virtual Router Redundancy Protocol »), conjointement avec un autre module de protection de lien Ethernet (sensiblement identique), implanté dans le noeud SGSN NS et référencé module MPLE3 ci-après. Comme indiqué précédemment, ce mécanisme consiste à observer le trafic sur le premier (ou le second) lien Ethernet LE1 (ou LE2) établi entre le noeud SGSN NS et la passerelle maître P1 (ou P2) afin, en cas de détection d'un problème ou panne ou dysfonctionnement survenant sur ce lien, d'ordonner à la passerelle maître P1 (ou P2) de se placer dans son état inactif et à la passerelle en veille P2 (ou P1) de se placer dans son état actif.

En présence d'un changement d'état d'activité conjoint des première P1 et seconde P2 passerelles, le trafic sortant du noeud SGSN est envoyé vers le routeur VRRP qui est dynamiquement lié à la passerelle devenue active (ou maître). En d'autres termes, le noeud SGSN NS bascule le trafic du premier (ou second) lien Ethernet LE1 (ou LE2) objet d'une panne vers le second (ou premier) lien Ethernet LE2 (ou LE1) de substitution. La mise à jour de la table dite ARP du noeud SGSN NS est effectuée par la nouvelle passerelle active au moyen d'un message, par exemple de type « gratuitous ARP ».

Chaque module de gestion MG1, MG2 intervient chaque fois que survient un problème de transfert de données IP entre le noeud SGSN (NS) et le commutateur XC, via la passerelle P1 ou P2 dans laquelle il est implanté, si celle-ci est active.

Plus précisément, lorsque survient un tel problème de transfert, le module de gestion, par exemple MG1 (ou MG2), force localement (dans sa passerelle active P1 (ou P2)) le changement d'état de chaque lien ATM LA1 (ou LA2), ce qui provoque le déclenchement du mécanisme de protection des liens ATM par le module MPLA implanté dans le commutateur XC. Le module MPLA du commutateur XC fait alors cesser l'utilisation par ce dernier de tous les premiers (ou seconds) liens ATM LA1 (ou LA2) qui sont raccordés à la passerelle initialement active P1 (ou P2). Le commutateur XC est ainsi contraint d'utiliser les liens ATM correspondants LA2 (ou LA1) qui sont raccordés à la passerelle initialement inactive P2 (ou P1). Dans le même temps, si les modules MPLE1 à MPLE3 n'ont pas déjà placés conjointement la première (ou seconde) passerelle initialement active P1 (ou P2) dans son état inactif et la seconde (ou première) passerelle inactive P2 (ou P1) dans son état actif, le module de gestion MG1 (ou MG2) de la passerelle P1 (ou P2) ordonne aux modules MPLE1 à MPLE3 de procéder à ce placement.

Le fonctionnement général du dispositif de conversion D, décrit ci-avant, va maintenant être détaillé en référence à trois types différents de problème de transfert.

Un premier type regroupe les problèmes (pannes ou dysfonctionnements) logiciels ou matériels survenant au niveau de l'un au moins des liens ATM LA1 ou LA2 qui raccordent la passerelle maître P1 ou P2 au commutateur XC.

Lorsque ce type de problème survient, c'est le module MPLA du commutateur XC qui le détecte et qui ordonne à son commutateur XC d'arrêter d'utiliser chaque lien ATM objet d'une panne pour utiliser chaque lien ATM de substitution correspondant, qui est raccordé à la passerelle inactive. Cela fait en effet partie de sa mission.

Pour détecter ce changement d'utilisation de lien(s) ATM, le module de gestion MG1 (ou MG2), qui est implanté dans la passerelle active P1 (ou P2), peut opérer d'au moins deux façons.

Une première façon consiste à permettre au module de gestion MG1 (ou MG2) d'observer le fonctionnement du commutateur XC, et plus précisément d'observer chaque changement d'utilisation (ou basculement) de liens ATM au sein du commutateur XC.

Dans ce cas, le module de gestion MG1 (ou MG2) force localement le changement d'état de chaque lien ATM LA1 (ou LA2), ce qui provoque le déclenchement du mécanisme de protection des liens ATM. Le module MPLA du commutateur XC fait alors cesser l'utilisation par ce dernier de tous les premiers (ou seconds) liens ATM LA1 (ou LA2) qui sont raccordés à la passerelle active P1 (ou P2). Le commutateur XC est ainsi contraint d'utiliser les liens ATM correspondants LA2 (ou LA1) qui sont raccordés à la passerelle initialement inactive P2 (ou P1). Mais, le module de gestion MG1 (ou MG2) doit également ordonner aux modules MPLE1 à MPLE3 de procéder au changement d'état d'activité des passerelles initialement active et inactive pour qu'elles deviennent respectivement inactive et active.

Par exemple, si le module de gestion MG1 détecte que le commutateur XC a basculé (à la demande de son module MPLA) un premier lien ATM, établi avec la première passerelle (maître) P1, vers le second lien ATM correspondant, établi avec la seconde passerelle (en veille) P2, alors ledit module de gestion MG1 force localement le changement d'état de chaque premier lien ATM LA1 dans sa passerelle P1, ce qui provoque le déclenchement du mécanisme de protection des liens ATM par le module MPLA du commutateur XC. Ce dernier est alors contraint de cesser d'utiliser tous les premier liens ATM LA1 et d'utiliser à la place tous les seconds liens ATM correspondants LA2. Par ailleurs, le module de gestion MG1 ordonne aux modules MPLE1 à MPLE3 de placer la première passerelle P1 dans son état inactif et la seconde passerelle P2 dans son état actif. Une fois ces changements effectués, le trafic peut alors reprendre de façon normale entre le commutateur XC et le noeud SGSN NS via la seconde passerelle P2 (alors qu'il se faisait initialement via la première passerelle P1).

Une seconde façon consiste à permettre à chaque module de gestion MG1, MG2 d'observer le fonctionnement de sa propre passerelle P1 ou P2, et plus précisément d'observer chaque arrêt d'utilisation d'un ou plusieurs liens ATM au niveau de sa passerelle P1 ou P2 (lorsqu'elle est active), décidé par le module MPLA du commutateur XC.

Dans ce cas, tout comme dans le cas précédent, le module de gestion MG1 (ou MG2) de la passerelle active P1 (ou P2) force localement le changement d'état de tous les liens ATM LA1 (ou LA2), ce qui provoque le déclenchement du mécanisme de protection des liens ATM par le module MPLA du commutateur XC et donc l'arrêt de l'utilisation de tous les premier liens ATM LA1 (ou seconds liens ATM LA2) et l'utilisation, à la place, de tous les seconds liens ATM correspondants LA2 (ou premiers liens ATM LA1). Le module de gestion MG1 (ou MG2) doit également ordonner aux modules MPLE1 à MPLE3 de placer la première passerelle P1 (ou P2) dans son état inactif et la seconde passerelle P2 (ou P1) dans son état actif. Une fois ces changements effectués, le trafic peut alors reprendre de façon normale entre le commutateur XC et le noeud SGSN NS via la seconde passerelle P2 (ou P1), alors qu'il se faisait initialement via la première passerelle P1 (ou P2).

Il est important de noter que l'on peut envisager que chaque module de gestion MG1, MG2 soit configuré de manière à n'agir auprès des modules MPLE1 à MPLE3 et du module MPLA (du commutateur XC) qu'à condition que le nombre de liens ATM objets d'un problème soit supérieur ou égal à un seuil choisi. En variante, on peut envisager que la passerelle possédant le plus grand nombre de liens ATM en état de fonctionnement soit celle qui demeure active.

Ce seuil peut prendre n'importe quelle valeur non nulle. Il est par exemple choisi en fonction du nombre de liens ATM établis entre une passerelle et un équipement d'accès. Lorsque le seuil est égal à 1 (un), on se retrouve dans le cas d'une intervention systématique du module de gestion MG1 ou MG2.

Un deuxième type regroupe les problèmes (pannes ou dysfonctionnements) logiciels ou matériels survenant au niveau du premier LE1 ou second LE2 lien Ethernet qui raccorde la passerelle maître P1 ou P2 au noeud SGSN NS.

Lorsque ce type de problème survient, ce sont les modules MPLE1 à MPLE3 qui le détectent et qui ordonnent aux passerelles initialement active et inactive de changer leur état d'activité pour qu'elles deviennent respectivement inactive et active. Cela fait en effet partie de leur mission.

Pour détecter ce changement d'utilisation de lien Ethernet, chaque module de gestion MG1, MG2 peut opérer d'au moins trois façons.

Une première façon consiste à permettre à chaque module de gestion MG1, MG2 d'observer le fonctionnement du module MPLE1, MPLE2 du dispositif D, et plus précisément d'observer chaque ordre de changement d'état d'activité qu'il transmet à la passerelle P1, P2.

Lorsque le module de gestion MG1 ou MG2 de la passerelle P1 ou P2 initialement active détecte une transmission d'ordre de changement d'état, il force localement le changement d'état de tous les liens ATM LA1 ou LA2, ce qui provoque le déclenchement du mécanisme de protection des liens ATM par le module MPLA du commutateur XC et donc l'arrêt de l'utilisation de tous les liens ATM LA1 ou LA2 et l'utilisation, à la place, de tous les liens ATM correspondants LA2 ou LA1.

Une fois que ce changement d'utilisation des liens ATM a été effectué, le trafic peut alors reprendre de façon normale entre le commutateur XC et le noeud SGSN NS via la passerelle nouvellement active (maître) (alors qu'il se faisait initialement via l'autre passerelle).

Une deuxième façon consiste à permettre à chaque module de gestion MG1, MG2 d'observer le fonctionnement de sa passerelle P1 ou P2, et plus précisément d'observer son état d'activité.

Dans ce cas, lorsque le module de gestion MG1 ou MG2 de la passerelle P1 ou P2 (initialement active) détecte un changement d'état au niveau de sa passerelle P1 ou P2, il force localement le changement d'état de tous les liens ATM LA1 ou LA2, ce qui provoque le déclenchement du mécanisme de protection des liens ATM par le module MPLA du commutateur XC et donc l'arrêt de l'utilisation de tous les liens ATM LA1 ou LA2 et l'utilisation, à la place, de tous les liens ATM correspondants LA2 ou LA1.

Une troisième façon consiste à permettre à chaque module de gestion MG1, MG2 d'observer le fonctionnement du noeud SGSN NS, et plus précisément d'observer le lien Ethernet LE1 ou LE2 qu'il utilise.

Dans ce cas, lorsque le module de gestion MG1 ou MG2 de la passerelle P1 ou P2 (initialement active) détecte un changement d'utilisation de lien Ethernet au niveau du noeud SGSN NS, décidé par les modules MPLE1 à MPLE3, il force localement dans sa passerelle P1 ou P2 le changement d'état de tous les liens ATM LA1 ou LA2, ce qui provoque le déclenchement du mécanisme de protection des liens ATM par le module MPLA du commutateur XC et donc l'arrêt de l'utilisation de tous les liens ATM LA1 ou LA2 et l'utilisation, à la place, de tous les liens ATM correspondants LA2 ou LA1.

Un troisième type regroupe les problèmes (pannes ou dysfonctionnements) logiciels ou matériels survenant au niveau d'une passerelle P1 ou P2.

Chaque module de gestion MG1, MG2 est par exemple chargé d'observer le fonctionnement des passerelles P1 et P2 afin de détecter tout problème de fonctionnement interne de nature à perturber le traitement des données IP reçues et devant être transférées après conversion de protocole de transport.

Lorsque le module de gestion MG1 ou MG2 de la passerelle P1 ou P2 (initialement active) détecte un problème de fonctionnement interne, il force localement le changement d'état de tous les liens ATM LA1 ou LA2, ce qui provoque le déclenchement du mécanisme de protection des liens ATM par le module MPLA du commutateur XC et donc l'arrêt de l'utilisation de tous les liens ATM LA1 ou LA2 et l'utilisation, à la place, de tous les liens ATM correspondants LA2 ou LA1. Il ordonne également aux modules MPLE1 à MPLE3 de procéder au changement d'état d'activité des passerelles initialement active P1 (ou P2) et inactive P2 (ou P1) pour qu'elles deviennent respectivement inactive et active.

Certaines incompatibilités entre un état opérationnel ATM et un état opérationnel Ethernet peuvent rendre inopérantes les passerelles P1 et P2. C'est par exemple le cas lorsqu'au niveau de la passerelle P1 tous les premiers liens ATM LA1 sont opérationnels alors que le premier lien Ethernet ne l'est pas, et lorsqu'au niveau de la passerelle P2 tous les seconds liens ATM LA2 ne sont pas opérationnels alors que le second lien Ethernet l'est.

Pour remédier à ce type de situation, l'invention propose de raccorder les passerelles P1 et P2 au moyen d'un lien auxiliaire LAA, de préférence de type Ethernet.

Pour détecter les incompatibilités précitées, chaque module de gestion MG1, MG2 doit être agencé de manière à observer le fonctionnement de sa passerelle P1 (ou P2).

Ainsi, lorsque le module de gestion MG1 (ou MG2) de la passerelle P1 (ou P2), initialement active, détecte un problème sur son lien Ethernet LE1 (ou LE2), il ordonne à sa passerelle P1 (ou P2) de transférer les données IP sous ATM, qu'elle reçoit du commutateur XC par les liens ATM LA1 (ou LA2), après les avoir converties en données IP sous Ethernet, vers la passerelle inactive P2 (ou P1), via le lien auxiliaire LAA. A réception de ces données IP sous Ethernet, la passerelle P2 (ou P1) n'a plus qu'à les transmettre au noeud SGSN NS via le lien Ethernet LE2 (ou LE1). Si le module de gestion MG2 (ou MG1) de la passerelle P2 (ou P1) détecte un problème sur ses liens ATM LA2 (ou LA1), il ordonne à sa passerelle P2 (ou P1) de transférer les données IP sous Ethernet (qu'elle reçoit du noeud SGSN NS via le lien Ethernet LE2) vers la passerelle P1 (ou P2), via le lien auxiliaire LAA. Lorsqu'elle reçoit les données IP sous Ethernet, la passerelle P1 (ou P2) les convertit en données IP sous ATM qu'elle transmet au commutateur XC via ses liens ATM LA1 (ou LA2).

Maintenant, lorsque le module de gestion MG1 (ou MG2) de la passerelle P1 (ou P2), initialement active, détecte un problème sur ses liens ATM LA1 (ou LA2), il ordonne à sa passerelle P1 (ou P2) de transférer les données IP sous Ethernet, qu'elle reçoit du noeud SGSN NS via le lien Ethernet LE1 (ou LE2), vers la passerelle inactive P2 (ou P1), via le lien auxiliaire LAA. Lorsqu'elle reçoit les données IP sous Ethernet, la passerelle P2 (ou P1) les convertit en données IP sous ATM qu'elle transmet au commutateur XC via ses liens ATM LA2 (ou LA1). Si le module de gestion MG2 (ou MG1) de la passerelle P2 (ou P1) détecte un problème sur son lien Ethernet LE2 (ou LE1), il ordonne à sa passerelle P2 (ou P1) de transférer les données IP sous ATM (qu'elle reçoit du commutateur XC via ses liens ATM LA2 (ou LA1)) après les avoir converties en données IP sous Ethernet, vers la passerelle P1 (ou P2), via le lien auxiliaire LAA. Lorsqu'elle reçoit les données IP sous Ethernet, la passerelle P1 (ou P2) n'a plus qu'à les transmettre au noeud SGSN NS via le lien Ethernet LE1 (ou LE2).

Le dispositif de conversion D selon l'invention, et notamment ses modules de gestion MG1 et MG2 et/ou ses modules de protection de lien Ethernet MPLE1 et MPLE2, peuvent être réalisés sous la forme de circuits électroniques, de modules logiciels (ou informatiques), ou d'une combinaison de circuits et de logiciels.

L'invention ne se limite pas aux modes de réalisation de dispositif de conversion décrits ci-avant, seulement à titre d'exemple, mais elle englobe toutes les variantes que pourra envisager l'homme de l'art dans le cadre des revendications ci-après.

## Revendications

1. Dispositif (D) de conversion de données IP sous ATM en données IP sous Ethernet, et réciproquement, pour un réseau de communication ATM/Ethemet comprenant un premier équipement (NS) propre à échanger des données Internet (IP) selon le protocole Ethernet et un réseau fédérateur (RF) propre à échanger des données Internet (IP) selon le protocole ATM, ledit dispositif comprenant :
- deux passerelles (P1,P2) raccordées chacune par un lien Ethernet (LE1,LE2) audit premier équipement (NS) et par des liens ATM (LA1,LA2), qui se correspondent un à un, à un équipement d'accès (XC) au réseau fédérateur (RF), muni d'un module de protection de lien ATM (MPLA), et agencées chacune pour assurer une conversion protocolaire ATM/Ethemet de données IP à transférer,
- des moyens de protection de lien Ethernet (MPLE1,MPLE2) implantés dans chacune desdites passerelles (P1,P2) et agencés pour placer leur passerelle dans un état actif autorisant le transfert de données IP ou dans un état inactif interdisant ledit transfert de données IP, en coopération avec des moyens de protection de lien Ethernet (MPLE3) implantés dans ledit premier équipement (NS),
- des moyens de gestion (MG1,MG2) implantés dans chacune desdites passerelles (P1,P2) et agencés chacun, en cas de problème de transfert de données IP entre ledit premier équipement (NS) et ledit équipement d'accès (XC), via sa passerelle (P1) lorsqu'elle est initialement active, pour provoquer l'arrêt de l'utilisation de tous les liens ATM (LA1) raccordés à sa passerelle (P1) afin que ledit équipement d'accès (XC) utilise les liens ATM correspondants (LA2) raccordés à l'autre passerelle initialement inactive (P2), et, si lesdits moyens de protection de lien Ethernet (MPLE1 à MPLE3) n'ont pas déjà placé ladite passerelle initialement active (P1) dans son état inactif et ladite passerelle inactive (P2) dans son état actif, pour leur ordonner ce placement.

2. Dispositif selon la revendication 1, **caractérisé en ce que** chacun desdits moyens de gestion (MG1,MG2) est agencé pour observer le fonctionnement dudit équipement d'accès (XC) de manière à détecter un problème de transfert au niveau d'un lien ATM (LA1) de sa passerelle active (P1) en cas de basculement de trafic vers le lien ATM correspondant (LA2) de la passerelle inactive (P2), décidé par le module de protection de lien ATM (MPLA) dudit équipement d'accès (XC).

3. Dispositif selon la revendication 1, **caractérisé en ce que** chacun desdits moyens de gestion (MG1,MG2) est agencé pour observer le fonctionnement de sa passerelle (P1,P2) de manière à détecter un problème de transfert au niveau d'un lien ATM (LA1) de sa passerelle active (P1) en cas d'arrêt de l'utilisation dudit lien ATM (LA1), décidé par le module de protection de lien ATM (MPLA) dudit équipement d'accès (XC).

4. Dispositif selon l'une des revendications 2 et 3, **caractérisé en ce que** chacun desdits moyens de gestion (MG1,MG2) est agencé pour provoquer ledit arrêt d'utilisation des liens ATM (LA1,LA2) de sa passerelle (P1,P2) lorsque le nombre de liens ATM (LA1,LA2) objets d'un problème est supérieur ou égal à un seuil choisi.

5. Dispositif selon l'une des revendications 1 à 4, **caractérisé en ce que** chacun desdits moyens de gestion (MG1,MG2) est agencé pour observer le fonctionnement desdits moyens de protection de lien Ethernet (MPLE1,MPLE2) correspondant, de manière à détecter un problème de transfert au niveau d'un lien Ethernet (LE1,LE2) lorsqu'ils décident de changer l'état d'activité de chacune desdites passerelles (P1,P2).

6. Dispositif selon l'une des revendications 1 à 4, **caractérisé en ce que** chacun desdits moyens de gestion (MG1,MG2) est agencé pour observer le fonctionnement de sa passerelle (P1,P2) de manière à détecter un problème de transfert au niveau d'un lien Ethernet (LE1,LE2) en cas de changement d'état d'activité de chacune desdites passerelles (P1,P2), décidé par lesdits moyens de protection de lien Ethemet (MPLE1 à MPLE3).

7. Dispositif selon l'une des revendications 1 à 4, **caractérisé en ce que** chacun desdits moyens de gestion (MG1,MG2) est agencé pour observer le fonctionnement dudit premier équipement (NS) de manière à détecter un problème de transfert au niveau d'un lien Ethernet (LE1,LE2) en cas de basculement de trafic du lien Ethernet (LE1) de la passerelle active (P1) vers le lien Ethernet (LE2) de la passerelle inactive (P2), décidé par lesdits moyens de protection de lien Ethemet (MPLE3) implantés dans ledit premier équipement (NS).

8. Dispositif selon l'une des revendications 1 à 7, **caractérisé en ce que** chacun desdits moyens de gestion (MG1,MG2) est agencé pour observer le fonctionnement de sa passerelle (P1,P2) de manière à détecter un problème de fonctionnement interne en cas d'arrêt de transfert de données IP sur les liens ATM (LA1) ou le lien Ethernet (LE1) de sa passerelle (P1) lorsqu'elle est active.

9. Dispositif selon l'une des revendications 1 à 8, **caractérisé en ce qu**'il comprend un lien auxiliaire (LAA) raccordant lesdites passerelles (P1,P2) entre elles, et en ce que lesdits moyens de gestion (MG1,MG2) sont agencés pour observer le fonctionnement de leur passerelle (P1,P2) et, en cas de détection de problèmes rendant simultanément inopérantes lesdites passerelles (P1,P2) sur des liens de types différents, pour ordonner à leur passerelle (P1) de transférer les données IP reçues vers l'autre passerelle (P2) via ledit lien auxiliaire (LAA).

10. Dispositif selon la revendication 9, **caractérisé en ce que** ledit lien auxiliaire (LAA) est de type Ethernet.

11. Dispositif selon l'une des revendications 1 à 10, **caractérisé en ce qu'**il est agencé sous la forme d'une interface de conversion ATM/Ethernet.

## Claims

1. A device (D) for converting IP data under ATM into IP data under Ethernet, and vice versa, for an ATM/Ethernet communicate network comprising first equipment (NS) suitable for exchanging Internet data (IP) using the Ethernet protocol and a backbone network (RF) suitable for exchanging Internet data (IP) using the ATM protocol, said device comprising:
· two gateways (P1, P2) each connected via an Ethernet link (LE1, LE2) to said first equipment (NS) and via a plurality of ATM links (LA1, LA2) in one to one correspondence with one another to access equipment (XC) giving access to the backbone network (RF), which access equipment is provided with an ATM link protection module (MPLA) , and each of the gateways being arranged to perform ATM/Ethernet protocol conversion on the IP data to be transferred:
· Ethernet link protection means (MPLE1. MPLE2) included in each of said gateways (P1, P2) and arranged to place the corresponding gateway in an active state authorizing IP data transfer or in an inactive state preventing said IP data transfer, in co-operation with Ethernet link protection means (MPLE3) included in said first equipment (NS); and
. management means (MG1, MG2) included in each of said gateways (P1, P2) and each arranged, in the event of a problem in transferring IP data between said first equipment (NS) and said access equipment (XC) via its own gateway (P1) when initially active, to cause the use of all of the ATM links (LA1) connected to its own gateway (P1) to cease so that said access equipment (XC) uses the corresponding ATM links (LA2) connected to the other gateway (P2) that was initially inactive, and if said Ethernet link protection means (MPLE1 to MPLE3) have not already placed said initially active gateway (P1) in its inactive state and said initially inactive gateway (P2) in its active state, to order said changeover.

2. A device according to claim 1, **characterized in that** each of said management means (MG1, MG2) is arranged to observe the operation of said access equipment (XC) so as to detect a transfer problem in an ATM link (LA1) of its own active gateway (P1) in the event of traffic being switched over to the corresponding ATM link (LA2) of the inactive gateway (P2) as decided upon by the ATM link protection module (MPLA) of said access equipment (XC).

3. A device according to claim 1, **characterized in that** each of said management means (MG1, MG2) is arranged to observe the operation of its own gateway (P1, P2) In such a manner as to detect a transfer problem over an ATM link (LA1) of its own active gateway (P-1) in the event of use of said ATM link (LA1) ceasing, as decided upon by the ATM link protection module (MPLA), of said access equipment (XC).

4. A device according to claim 1, **characterized in that** each of said management means (MG1, MG2) is arranged to cause the use of the ATM links (LA1, LA2) of its own gateway (P1, P2) to cease whenever the number of ATM links (LA1, LA2) suffering a problem is greater than or equal to a selected threshold.

5. A device according to claim 1, **characterized in that** each of said management means (MG1, MG2) is arranged to observe the operation of said corresponding Ethernet link protection means (MPLE1, MPLE2) in order to detect a transfer problem over an Ethernet link (LE1, LE2) on deciding to change over the activity states of sold gateways (P1, P2).

6. A device according to claim 1, **characterized in that** each of said management means (MG1, MG2) is arranged to observe the operation of its own gateway (P1, P2) in order to detect a transfer problem over an Ethernet link (LE1, LE2) in the event of a changeover in the activity states of said gateways (P1, P2) as decided upon by said Ethernet link protection means (MPLE1 to MPLE3).

7. A device according to claim 1, **characterized in that** each of said management means (MG1, MG2) is arranged to observe the operation of said first equipment (NS) in such a manner as to detect a transfer problem over all Ethernet link (LE1, LE2) in the event of traffic being changed over from the Ethernet link (LE1) of the active gateway (P1) to the Ethernet link (LE2) of the inactive gateway (P2) as decided upon by said Ethernet link protect means (MPLE3) included in said first equipment (NS).

8. A device according to claim 1, **characterized in that** each of said management means (MG1, MG2) is arranged to observe the operation of its own gateway (P1, P2) in such a manner as to detect a problem of internal operation in the event of IP data transfer ceasing over the ATM links (LA1) or the Ethernet link (LE1) of its own gateway (P1) while it is active.

9. A device according to claim 1, **characterized in that** it includes an auxiliary link (LAA) interconnecting said gateway (P1, P2), and **in that** Said management means (MG1, MG2) are arranged to observe the operation of their own gateway (P1, P2) in order to detect problems that make said gateways (P1, P2) inoperative simultaneously, but over links of different types, in order to instruct their own gateway (P1) to transfer received IP data to the other gateway (P2) via said auxiliary link (LAA).

10. A device according to claim 9. **characterized in that** said auxiliary link (LAA) is of the Ethernet type.

11. A device according to claim 1, **characterized in that** it is arranged in the form of an ATM/Ethernet conversion interface.

## Patentansprüche

1. Vorrichtung (D) zur Übersetzung von IP-über-ATM-Daten in IP-über-Ethernet-Daten und umgekehrt für ein ATM/Ethernet-Kommunikationsnetz, umfassend eine erste Einrichtung (NS), die zum Austausch von Internet-Daten (IP) über das Ethernet-Protokoll geeignet ist, sowie ein Backbone-Netz (RF), das zum Austausch von Internet-Daten (IP) über das ATM-Protokoll geeignet ist, wobei die Vorrichtung umfasst:
- zwei Gateways (P1, P2), von denen jeder über eine Ethernet-Verbindung (LE1, LE2) mit der ersten Einrichtung (NS) verbunden ist und über ATM-Verbindungen (LA1, LA2), die einander entsprechen, mit einer Zugangseinrichtung (XC) zum Backbone-Netz (RF), die mit einem Modul zum Schutz der ATM-Verbindung (MPLA) ausgestattet ist, und wobei jeder von ihnen dazu angeordnet ist, eine ATM/Ethernet-Protokollübersetzung von zu übertragenden IP-Daten sicherzustellen;
- Mittel zum Schutz der Ethernet-Verbindung (MPLE1 , MPLE2), die in jedem der Gateways (P1, P2) implementiert sind und die dazu angeordnet sind, ihren Gateway in einen aktiven Zustand zu versetzen, welcher die Übertragung von IP-Daten gestattet, oder in einen inaktiven Zustand, der die übertragung von lP-Daten verbietet, und zwar in Zusammenarbeit mit Mitteln zum Schutz der Ethernet-Verbindung (MPLE3), die in der ersten Einrichtung (NS) implementiert sind;
- Managementmittel (MG1, MG2), die in jedem der Gateways (P1, P2) implementiert sind und von denen jedes dazu angeordnet ist, im Fall eines Übertragungsproblems von IP-Daten zwischen der ersten Einrichtung (NS) und der Zugangseinrichtung (XC) über ihren Gateway (P1), wenn dieser ursprünglich aktiv ist, die Nutzungseinstellung aller ATM-Verbindungen (LA1) hervorzurufen, die an ihren Gateway (P1) angeschlossen sind, damit die Zugangseinrichtung (XC) die entsprechenden ATM-Verbindungen (LA2) nutzt, die an den anderen, ursprünglich inaktiven Gateway (P2) angeschlossen sind, und dann, wenn die Mittel zum Schutz der Ethernet-Verbindung (MPLE1 bis MPLE3) ihren ursprünglich aktiven Gateway (P1) noch nicht in seinen inaktiven Zustand und den inaktiven Gateway (P2) in seinen aktiven Zustand versetzt haben, ihnen diese Versetzung zu befehlen.

2. Vorrichtung nach Anspruch 1, **dadurch gekennzeichnet, dass** jedes der Managementmittel (MG1, MG2) dazu, angeordnet ist, die Funktionsweise der Zugangseinrichtung (XC) so zu beobachten, dass es ein Übertragungsproblem auf einer ATM-Verbindung (LA1) ihres aktiven Gateways (P1) im Fall einer Verkehrsumschaltung zu der entsprechenden ATM-Verbindung (LA2) des inaktiven Gateways (P2) erkennt, die von dem Modul zum Schutz der ATM-Verbindung (MPLA) der Einrichtung (XC) beschlossen wurde.

3. Vorrichtung nach Anspruch 1, **dadurch gekennzeichnet, dass** jedes der Managementmittel (MG1, MG2) dazu angeordnet ist, die Funktionsweise seines Gateways (P1, P2) so zu beobachten, dass es ein Übertragungsproblem auf einer ATM-Verbindung (LA1) seines aktiven Gateways (P1) im Fall der Nutzungseinstellung dieser ATM-Verbindung (LA1) erkennt, die von dem Modul zum Schutz der ATM-Verbindung (MPLA) der Zugangseinrichtung (XC) beschlossen wurde.

4. Vorrichtung nach einem der Ansprüche 2 und 3, **dadurch gekennzeichnet, dass** jedes der Managementmittel (MG1, MG2) dazu angeordnet ist, die Nutzungseinstellung der ATM-Verbindungen (LA1, LA2) ihres Gateways (P1, P2) hervorzurufen, wenn die Anzahl der von einem Problem betroffenen ATM-Veroindungen (LA1, LA2) größer oder gleich einem gewähiten Schwellenwert ist.

5. Vorrichtung nach einen der Ansprüche 1 bis 4, **dadurch gekennzeichnet, dass** jedes der Managementmittel (MG1, MG2) dazu angeordnet ist, die Funktionsweise der Mittel zum Schutz der entsprechenden Ethernet-Verbindung (MPLE1, MPLE2) so zu beobachten, dass es ein Übertragungsproblem auf einer Ethernet-Verbindung (LE1, LE2) erkennt, wenn diese beschließen, den Aktivitätszustand jedes der Gateways (P1. P2) zu ändern.

6. Vorrichtung nach einem der Ansprüche 1 bis 4, **dadurch gekennzeichnet, dass** jedes der Managementmittel (MG1, MG2) dazu angeordnet ist, die Funktionsweise seines Gateways (P1, P2) so zu beobachten, dass es ein Übertragungsproblem auf einer Ethernet-Vetbindung (LE1, LE2) im Fall einer Änderung des Aktivitätszustands jedes der Gateways (P1, P2) erkennt, die von den Mitteln zum Schutz der Ethernet-Verbindung (MPLE1 bis MPLE3) beschlossen wurde.

7. Vorrichtung nach einem der Ansprüche 1 bis 4, **dadurch gekennzeichnet, dass** jedes der Managementmittel (MG1, MG2) dazu abgeordnet ist, die Funktionsweise der ersten Einrichtung (NS) so zu beobachten, dass es ein Übertragungsproblem auf einer Ethernet-Verbindung (LE1, LE2) im Fall einer Verkehrsumschaltung von der Ethernet-Verbindung (LE1) des aktiven Gateways (P1) zur Ethernet-Verbindung (LE2) des inaktiven Gateways (P2) erkennt, die von den Mitteln zum Schutz der Ethemet-Verbindung (MPLE3) beschlossen wurde, Welche in der ersten Einrichtung (NS) implementiert sind.

8. Vorrichtung nach einem der Ansprüche 1 bis 7, **dadurch gekennzeichnet, dass** jedes der Managementmittel (MG1, MG2) dazu angeordnet ist, die Funktionsweise seines Gateways (P1, P2) so zu beobachten, dass es ein internes Betriebsproblem im Fall der Einstellung der IP-Datenübertragung auf den ATM-Verbindungen (LA1) oder auf der Ethernet-Verbindung (LE1) seines Gateways (P1) erkennt, während dieser aktiv ist.

9. Vorrichtung nach einem der Ansprüche 1 bis 8, **dadurch gekennzeichnet, dass** sie eine Hilfsverbindung (LAA) umfasst, welche die Gateways aneinander anschließt, und **dadurch**, dass die Managementmittel (MG1, MG2) dazu angeordnet sind, die, Funktionsweise ihres Gateways (P1,P2) zu beobachten und im Fall der Erkennung von Problemen, welche diese Gateways (P1. P2) auf den Verbindungen unterschiedlicher Typen gleichzeitig betriebsunfähig machen, ihrem Gateway (P1) zu befehlen, die empfangenen IP-Daten über die Hilfsverbindung (LAA) zu dem anderen Gateway (P2) zu übertragen.

10. Vorrichtung nach Anspruch 9, **dadurch gekennzeichnet, dass** die Hilfsverbindung (LAA) dem Ethernet-Typ entspricht.

11. Vorrichtung nach einem der Ansprüche 1 bis 10, **dadurch gekennzeichnet, dass** sie In Form einer ATM/Ethernet-Übersetzungsschnittstelle angeordnet ist.
